# EUROPEAN PATENT SPECIFICATION

(11) **EP 2 885 253 B1**
(45) Date of publication and mention of the grant of the patent: **02.06.2021**
(21) Application number: 13748454.9
(22) Date of filing: 07.08.2013
(51) Int. Cl.: C03C 3/085, C03C 3/087, C03C 21/00

(54) **ULTRA-THIN STRENGTHENED GLASSES**
ULTRA-DÜNNE GESTÄRKTE GLÄSER
ULTRA-MINCE VERRES RENFORCÉS

(30) Priority: 17.08.2012 US 201261684392 P
(43) Date of publication of application: 24.06.2015
(73) Proprietor: Corning Incorporated, Corning, New York 14831 (US)
(72) Inventor: MAURO, John Christopher, Corning, New York 14830 (US); SMEDSKJAER, Morten Mattrup, DK-9000 Aalborg (DK)
(74) Representative: Elkington and Fife LLP
(86) International application number: PCT/US2013/053938
(87) International publication number: WO 2014/028284

(56) References cited:
- WO-A1-2011/149811
- US-A1- 2008 286 548
- US-A1- 2010 028 607
- US-A1- 2010 035 038
- US-A1- 2010 291 353

## Description

### BACKGROUND

The disclosure relates to ion exchangeable glasses. More particularly, the disclosure relates to ion exchangeable glasses that may be formed into articles having a thickness of less than about 0.4 mm (about 400 microns).

The demand for chemically strengthened glasses for applications such as transparent display windows for electronic devices continues to increase, and research within this area has focused on optimizing glass compositions to simultaneously provide high compressive stress (CS) at the surface of the glass and a deep depth of the compressive layer (DOL) via ion exchange. These glasses have traditionally been produced at thicknesses ranging from 0.5 mm to 1.3 mm, and some commercial quality glasses having a thickness of about 0.4 mm have been produced.

US 2010/0291353 A1 discloses a method of cutting a chemically or thermally strengthened glass sheet along a predetermined line, axis, or direction.

US 2010/0035038 A1 discloses a strengthened glass article having a central tension that is below a threshold value above which the glass exhibits frangible behaviour. US 2008/0286548 A1 discloses an alkali aluminosilicate glass that is chemically strengthened and has a down-drawable composition.

### SUMMARY

Glass compositions having properties that are optimized for forming articles having ultra-thin (< 0.4 mm, or 400 µm) thickness and applications requiring ultra-thin glass are provided. These properties include both forming-related properties such as the coefficients of thermal expansion (CTE) of both the liquid and glassy state of the glass, liquidus viscosity, and properties affecting the mechanical performance of the glass (compressive stress, depth of layer, elastic or Young's modulus).

Accordingly, one aspect of the disclosure is to provide a glass comprising at least about 65 mol% SiO₂ and at least about 6 mol% Na₂O and having a thickness of less than 400 µm. The difference between a first coefficient of thermal expansion and a second coefficient of thermal expansion (ΔCTE) is less than 107 x 10⁷°C⁻¹, where the first coefficient of thermal expansion is the coefficient of thermal expansion of the glass in its liquid state and the second coefficient of thermal expansion is the coefficient of thermal expansion of the glass in its glassy state at room temperature.

A second aspect is to provide a glass article comprising: at least about 65 mol% SiO₂; from about 7 mol% to about 16 mol% Al₂O₃; from 0 mol% to about 10 mol% Li₂O; from about 6 mol% to about 16 mol% Na₂O; from 0 mol% to about 2.5 mol% K₂O; from 0 mol% to about 8.5 mol% MgO; from 0 mol% to about 1.5 mol% CaO; from 0 mol% to about 6 mol% ZnO; and from 0 mol% to about 6 mol% ZrO₂. The glass article has a thickness of less than 400 µm and a difference between a first coefficient of thermal expansion and a second coefficient of thermal expansion (ΔCTE) of less than 107 x 10⁷°C⁻¹, where the first coefficient of thermal expansion is the coefficient of thermal expansion of the glass article in its liquid state and the second coefficient of thermal expansion is the coefficient of thermal expansion of the glass article in its glassy state at room temperature.

These and other aspects, advantages, and salient features will become apparent from the following detailed description, the accompanying drawings, and the appended claims.

### BRIEF DESCRIPTION OF THE DRAWINGS

FIGURES la-d are plots of high-temperature coefficients of thermal expansion (CTE) measurements of selected glasses listed in Table 1;
FIGURE 2 is a plot showing the impact of substitution of Li₂O and SiO₂ for Na₂O and substitution of ZrO₂ for MgO for selected glasses listed in Table 1;
FIGURE 3 is a plot showing the impact of substitution of Li₂O and SiO₂ for Na₂O and substitution of ZrO₂ for MgO on Young's modulus for selected glasses listed in Table 1; and
FIGURE 4 is a plot showing the impact of substitution of Li₂O and SiO₂ for Na₂O and substitution of ZrO₂ for MgO on properties resulting from ion exchange at 410°C in a KNO₃ molten salt bath for selected glasses listed in Table 1.

### DETAILED DESCRIPTION

In the following description, like reference characters designate like or corresponding parts throughout the several views shown in the figures. It is also understood that, unless otherwise specified, terms such as "top," "bottom," "outward," "inward," and the like are words of convenience and are not to be construed as limiting terms. In addition, whenever a group is described as comprising at least one of a group of elements and combinations thereof, it is understood that the group may comprise, consist essentially of, or consist of any number of those elements recited, either individually or in combination with each other. Similarly, whenever a group is described as consisting of at least one of a group of elements or combinations thereof, it is understood that the group may consist of any number of those elements recited, either individually or in combination with each other. Unless otherwise specified, a range of values, when recited, includes both the upper and lower limits of the range as well as any ranges therebetween. As used herein, the indefinite articles "a," "an," and the corresponding definite article "the" mean "at least one" or "one or more," unless otherwise specified. It also is understood that the various features disclosed in the specification and the drawings can be used in any and all combinations.

As used herein, the terms "glass" and "glasses" includes both glasses and glass ceramics. The terms "glass article" and "glass articles" are used in their broadest sense to include any object made wholly or partly of glass and/or glass ceramic. As used herein, the term "ultra-thin glass" refers to glasses and glass articles having a thickness of less than 0.4 mm, or 400 microns (µm), unless otherwise specified. Unless otherwise specified, all concentrations are expressed in mole percent (mol%).

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

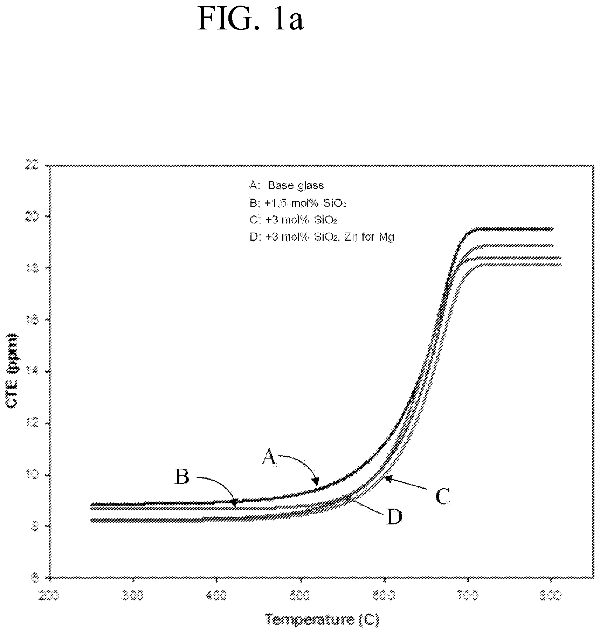

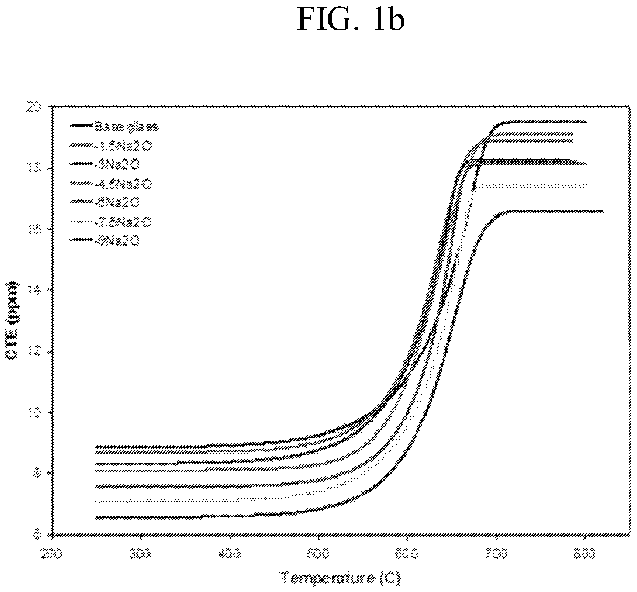

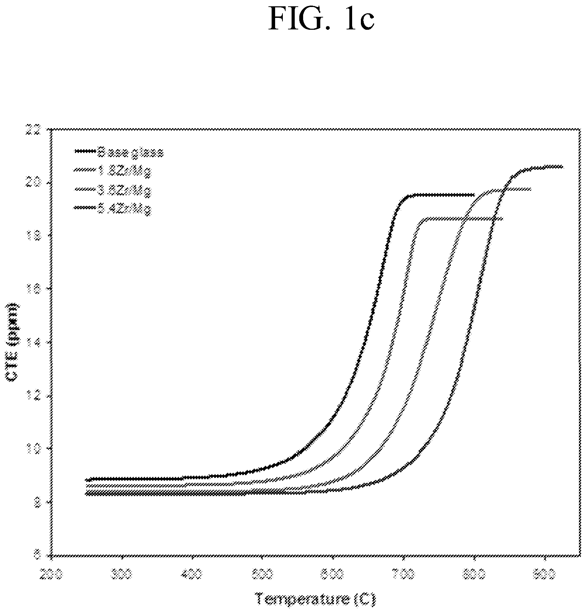

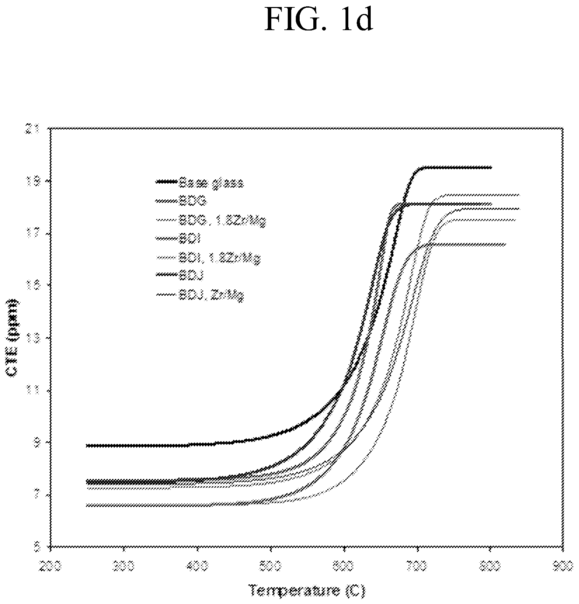

Referring to the drawings in general and to FIG. 1 in particular, it will be understood that the illustrations are for the purpose of describing particular embodiments and are not intended to limit the disclosure or appended claims thereto. The drawings are not necessarily to scale, and certain features and certain views of the drawings may be shown exaggerated in scale or in schematic in the interest of clarity and conciseness.

The demand for chemically strengthened glasses for applications such as transparent display windows for electronic devices continues to increase, and research within this area has focused on optimizing glass compositions to simultaneously provide high compressive stress (CS) at the surface of the glass and a deep depth of the compressive layer (DOL) via ion exchange. These glasses have traditionally been produced at a thickness ranging from 0.5 mm to 1.3 mm, and some commercial quality glasses having a thickness of about 0.4 mm have been produced.

More recent trends in device design, however, necessitates the use of thinner chemically strengthened glasses. Chemical strengthening of ultra-thin glass poses a special challenge, since the integrated compressive stress in the surface of the glass must be balanced by an equivalent magnitude of integrated tensile stress in the interior of the glass. If the tensile stress is too high, this so-called "central tension" can lead to catastrophic frangible failure of the glass article. Therefore, what is needed is an understanding of the characterization and failure modes of ultra-thin (i.e., glass having a thickness of less than 0.4 mm or 400 microns (µm)) glass. What is also needed are glass compositions having optimized properties and manufacturability (e.g., damage resistance) for ultra-thin applications. In particular, the difference in thermal expansion coefficient (ΔCTE) between the high temperature liquid state and low temperature glassy state must be reduced to facilitate the manufacture of ultra-thin glass.

Described herein are glass compositions having properties that are optimized for ultra-thin forming and applications requiring ultra-thin glass. These properties include both forming-related properties such as the coefficients of thermal expansion (CTE) of both the liquid (also referred to as "high temperature CTE") and glassy state of the glass and liquidus viscosity) and properties affecting the mechanical performance of the glass (CS, DOL, elastic or Young's modulus).

The glasses described herein are ion exchangeable or otherwise chemically strengthened by those means known in the art. The glass compositions are, in some embodiments, designed to allow ultra-thin forming using down-draw processes known in the art such as, but not limited to, fusion-draw and down-draw processes. In some embodiments, the glass compositions are designed to allow the glass to be ion exchanged to a high compressive stress in a relatively short period of time.

The glass and glass articles described herein comprise at least about 65 mol% SiO₂ and at least about 6 mol% Na₂O and have a thickness of less than 400 microns (µm), or 400 mm.

In some embodiments, the glass is an alkali aluminosilicate glass comprising Al₂O₃ and at least one of Li₂O, K₂O, MgO, CaO, and ZnO, wherein Na₂O + K₂O + Li₂O - Al₂O₃ ≥ 0 mol%. In some embodiments, the glass comprises from about 7 mol% to about 16 mol% Al₂O₃; from 0 mol% to about 10 mol% Li₂O; from about 6 mol% to about 16 mol% Na₂O; from 0 mol% to about 2.5 mol% K₂O; from 0 mol% to about 8.5 mol% MgO; from 0 mol% to about 1.5 mol% CaO; from 0 mol% to about 6 mol% ZnO; and from 0 mol% to about 6 mol% ZrO₂. In some embodiments, 3 mol% ≤ MgO + CaO + ZnO ≤ 4 mol%.

In the glass compositions described herein, SiO₂ serves as the primary glass-forming oxide, and comprises at least about 65 mol% of the glass. The glass, in some embodiments, comprises from about 65 mol% to about 75 mol% SiO₂. The concentration of SiO₂ is high enough to provide the glass with high chemical durability that is suitable for applications such as, for example, touch screens or the like. However, the melting temperature (200 poise temperature, T₂₀₀) of pure SiO₂ or glasses containing higher levels of SiO₂ is too high, since defects such as fining bubbles tend to appear in the glass. In addition, SiO₂, in comparison to most oxides, decreases the compressive stress created by ion exchange.

Alumina (Al₂O₃), which, in some embodiments, comprises from about 7 mol% to about 16 mol% and, in other embodiments, from about 8 mol% to about 11 mol% of the glasses described herein, may also serve as a glass former. Like SiO₂, alumina generally increases the viscosity of the melt. An increase in Al₂O₃ relative to the alkalis or alkaline earths in the glass generally results in improved durability of the glass. The structural role of the aluminum ions depends on the glass composition. When the concentration of alkali metal oxides R₂O is greater than that of alumina, all aluminum is found in tetrahedral, four-fold coordination with the alkali metal ions acting as charge-balancers. This is the case for all of the glasses described herein. Divalent cation oxides (RO) can also charge balance tetrahedral aluminum to various extents. Elements such as calcium, strontium, and barium behave equivalently to two alkali ions, whereas the high field strength of magnesium ions cause them to not fully charge balance aluminum in tetrahedral coordination, resulting instead in formation of five- and six-fold coordinated aluminum. Al₂O₃ enables a strong network backbone (i.e., high strain point) while allowing relatively fast diffusivity of alkali ions, and thus plays an important role in ion-exchangeable glasses. High Al₂O₃ concentrations, however, generally lower the liquidus viscosity of the glass. One alternative is to partially substitute other oxides for Al₂O₃ while maintaining or improving ion exchange performance of the glass.

The glasses described herein comprise at least 6 mol% Na₂O and, in some embodiments, from about 6 mol% to about 16 mol% Na₂O and, optionally, at least one other alkali oxide such as, for example, Li₂O and K₂O such that Na₂O + K₂O + Li₂O - Al₂O₃ ≥ 0 mol%. Alkali oxides (Li₂O, Na₂O, K₂O, Rb₂O, and Cs₂O) serve as aids in achieving low melting temperature and low liquidus temperatures of glasses. The addition of alkali oxides, however, increases the coefficient of thermal expansion (CTE) and lowers the chemical durability of the glass. In order to achieve ion exchange, a small alkali oxide (such as, for example, Li₂O and Na₂O) must be present in the glass to exchange with larger alkali ions (e.g., K⁺) from a molten salt bath. Three types of ion exchange may typically be carried out: Na⁺-for-Li⁺ exchange, which results in a deep depth of layer but low compressive stress; K⁺-for-Li⁺ exchange, which results in a small depth of layer but a relatively large compressive stress; and K⁺-for-Na⁺ exchange, which results in an intermediate depth of layer and compressive stress. A sufficiently high concentration of the small alkali oxide is necessary to produce a large compressive stress in the glass, since compressive stress is proportional to the number of alkali ions that are exchanged out of the glass. Accordingly, the glasses described herein comprise from 6 mol% to about 16 mol% Na₂O and, in other embodiments, from about 11 mol% to about 16 mol% Na₂O. The presence of a small amount of K₂O generally improves diffusivity and lowers the liquidus temperature of the glass, but increases the CTE. Accordingly, the glasses described herein, in some embodiments, may comprise from 0 mol% to about 2.5 mol% K₂O and, in other embodiments, from about 0 mol% to about 1.5 mol% K₂O. In some embodiments, the glasses may comprise from 0 mol% to about 10 mol% Li₂O, in other embodiments, from 0 mol% to 6 mol% Li₂O and, in still other embodiments, 0 mol% Li₂O. Partial substitutions of Rb₂O and/or Cs₂O for Na₂O decrease both CS and DOL of the strengthened glass.

Divalent cation oxides such as alkaline earth oxides and ZnO also improve the melting behavior of the glass. The glasses described herein may, in some embodiments, may comprise up to about 8.5 mol% MgO, up to about 1.5 mol% CaO, and/or up to about 6 mol% ZnO. In some embodiments, the glass may comprise from about 2 mol% to about 6 mol% MgO, in some embodiments, 0 mol% to about 3 mol% ZnO and/or, in some embodiments, 0 mol% to about 1.5 mol% CaO. In some embodiments, 3 mol% ≤ MgO + CaO + ZnO ≤ 4 mol%. Alternatively, the glasses described herein may comprise 0 mol% of any of the above divalent cations. With respect to ion exchange performance, however, the presence of divalent cations tends to decrease alkali mobility. The effect of divalent ions on ion exchange performance is especially pronounced with larger divalent cations such as, for example, SrO, BaO, and the like. Furthermore, smaller divalent cation oxides generally enhance compressive stress more than larger divalent cations. MgO and ZnO, for example, offer several advantages with respect to improved stress relaxation while minimizing adverse effects on alkali diffusivity. Higher concentrations of MgO and ZnO, however, promote formation of forsterite (Mg₂SiO₄) and gahnite (ZnAl₂O₄), or willemite (Zn₂SiO₄), thus causing the liquidus temperature of the glass to rise very steeply with increasing MgO and/or ZnO content. In some embodiments, transition metal oxides such as ZnO and ZrO₂ may be substituted for at least a portion of the MgO in the glass while maintaining or improving the ion exchange performance of the glass.

Zirconia (ZrO₂) helps to improve the chemical durability of the glass. In the presence of charge-compensating cations, six-fold coordinated zirconium is inserted in the silicate network by forming Si-O-Zr bonds. In some embodiments, the glasses described herein may comprise up to 6 mol% ZrO₂ and, in some embodiments, up to 3 mol% ZrO₂. Hence, the [ZrO₆]²⁻ groups are charge-compensated by two positive charges; i.e., either two alkali ions or one alkaline earth ion. In some embodiments, ZrO₂ is partially substituted for SiO₂ in some of the glasses described herein and, in certain embodiments, MgO is completely (or substantially completely) replaced by ZrO₂. Zirconia substitution increases the anneal point, refractive index, and elastic moduli of the glass, but lowers the liquidus viscosity.

The coefficient of thermal expansion (CTE) is a sum of vibrational and configurational contributions that can be separated from each other. The glassy state contains primarily vibrational degrees of freedom, whereas the supercooled liquid state contains both vibrational and configurational degrees of freedom, with the total CTE being the sum of these two contributions. Hence, a change in CTE from the supercooled liquid to the glassy state corresponds to the configurational CTE, which should be minimized for ultra-thin glass formation. It has been demonstrated that the configurational CTE is linked with the equilibrium liquid dynamics through the glass transition temperature (*T*_{g}) and the liquid fragility index (m). Lower fragility and higher glass transition temperature will decrease the configurational CTE.

Each of the glasses described herein exists in a liquid state having a first coefficient of thermal expansion - or high temperature CTE - and a glassy state having a second coefficient of thermal expansion at room temperature (about 25°C; e.g., 25±5°C), or glassy CTE. The difference between the first CTE and second CTE (ΔCTE) is less than about 107 x 10⁷°C⁻¹. In some embodiments, the first, or high temperature, CTE is at most about 200 x 10⁷°C⁻¹.

In some embodiments, the glasses described herein have a liquidus viscosity of at least about 100 kilopoise (kP), which enables the glasses to be formed by down draw techniques such as fusion-draw and slot draw methods known in the art.

In some embodiments, the glass article is ion exchanged. As used herein, the term "ion exchange" relates to strengthening processes known in the art of glass fabrication. Such ion exchange processes include, but are not limited to, treating a glass comprising at least one cation, such as an alkali metal cation or the like, with a heated solution containing cations having the same valence (most commonly monovalent) as the cations present in the glass, but having a larger ionic radius than the cations in the glass. For example, potassium (K⁺) ions in the solution may replace sodium (Na+) ions in an alkali aluminosilicate glass. Alternatively, alkali metal cations having larger ionic radii, such as rubidium or cesium, may replace smaller alkali metal cations in the glass.

The larger cations replace the smaller cations in the glass in a layer adjacent to the outer surface of the glass, thereby placing the layer under a compressive stress (CS). The layer under compression is sometimes referred to as a "compressive layer." The depth of the compressive layer, or "depth of layer (DOL)" is the point at which stress within the glass transitions from a positive stress (compression) to a negative stress (tension) and thus has a value of zero.

Alkali metal salts such as, but not limited to, sulfates, halides, nitrates, nitrites, and the like may be used in the on exchanged process. In some embodiments, the glass is chemically strengthened by placing it in a molten salt bath comprising a salt of the larger alkali metal. For example, a sodium-containing glass may be immersed in a molten salt bath containing potassium nitrate (KNO₃) for a predetermined time period to achieve a desired level of ion exchange. Temperatures of such baths, in some embodiments, are typically in a range from about 410°C to about 430°C. The residence time of the glass article in the molten salt bath may vary depending on the desired magnitude of CS and DOL, and, in some embodiments, may range from about 30 minutes to about 16 hours.

When ion exchanged, the glass and glass articles described herein have a compressive layer extending from a surface of the glass article to a depth of layer within the glass article. The compressive layer has a compressive stress of at least 500 megaPascals (MPa) and a depth of layer of at least 5 µm. Compressive stress and depth of layer are measured using those means known in the art. Such means include, but are not limited to measurement of surface stress (FSM) using commercially available instruments such as the FSM-6000, manufactured by Luceo Co., Ltd. (Tokyo, Japan), or the like, and methods of measuring compressive stress and depth of layer are described in ASTM 1422C-99, entitled "Standard Specification for Chemically Strengthened Flat Glass," and ASTM 1279.19779 "Standard Test Method for Non-Destructive Photoelastic Measurement of Edge and Surface Stresses in Annealed, Heat-Strengthened, and Fully-Tempered Flat Glass". Surface stress measurements rely upon the accurate measurement of the stress optical coefficient (SOC), which is related to the stress-induced birefringence of the glass.

In order to prepare ultra-thin glass, the fusion-draw process has to be optimized, for example, to ensure stable thickness control, the glass composition itself should have or result in properties that ease the manufacturing process and improve the attributes of the final glass product. First, to facilitate manufacturing, the change in CTE from supercooled liquid to glassy state (ΔCTE) should be as small as possible and the change should occur over as large a temperature range as possible. The absolute CTE values of the liquid state should be as low as possible. As previously described hereinabove, CTEs and, consequently, ΔCTE, may be adjusted to some extent by changes in composition. Secondly, the glass should have as high compressive stress (CS) as possible to improve its mechanical performance, for example, upon different types of impact. As the thickness of the glass decreases, however, the importance of high depth of layer (DOL) also decreases, since the region of the glass where tension can be stored also decreases. Thirdly, the glass should have as high elastic modulus as possible, since surface deformations can easily occur on the ultra-thin glass. The glass compositions described herein improve all of these three requirements in comparison to a reference or "base" glass composition.

Non-limiting examples of the glass compositions described herein and selected properties are listed in Table 1. In the examples listed, various additions and/or substitutions were made added to a crucible-melt base glass ("base glass" in the following tables). In one series of samples, additional amounts of SiO₂ were added "to the top" of the base glass (examples A-C). The purpose of this addition was to lower the liquid fragility index *m* in order to lower the CTE. In other samples, Li₂O and SiO₂ were substituted for Na₂O (examples D-K), the purpose of this being to lower absolute values of CTE and increase the elastic modulus of the glass. In other samples, ZrO₂ was either partially substituted for MgO (examples L-O, R) or completely replaced MgO (example V). In example O, the composition of Example G was initially batched with a partial substitution (1.8 mol%) of ZrO₂ for MgO. In example O, the composition of Example I was initially batched with a partial substitution (1.8 mol%) of ZrO₂ for MgO, and in example V, the composition of example J was initially batched with ZrO₂ completely replacing MgO The purpose of this substitution was to increase the elastic modulus of the glass and improve ion exchange properties (e.g., rate of exchange, CS, DOL, etc.). In still other samples, ZnO was substituted for MgO (examples J, K), the purpose of which was to increase the elastic modulus of the glass.

The compositions of the glasses listed in the tables were analyzed by x-ray fluorescence and/or ICP (inertially coupled plasma). Anneal, strain, and softening points were determined by fiber elongation. The coefficients of thermal expansion (CTE) of the glass in its glassy and liquid states were determined as the average value between room temperature (about 25°C) and 300°C and the value of the supercooled liquid above the glass transition, respectively, and the difference between the two (ΔCTE) was calculated from the two values. The liquidus temperature reported in Table 1 is for 24 hours. Elastic moduli were determined by resonant ultrasound spectroscopy. The refractive index listed in the tables is stated for 589.3 nm. Stress optic coefficients (SOC) were determined by the diametral compression method.

The annealed glasses listed in Table 1 were ion exchanged in a pure (technical grade) KNO₃ molten salt bath at 410°C for different time periods. The resulting compressive stresses and depths of layer obtained after ion exchange for time ranging from 4 hours to 16 hours are listed in Table 2. Compressive stress values calculated at a fixed DOL of 50 µm and the ion exchange time required to achieve a DOL of 50 µm are shown in Table 3. In Table 3, values in parentheses indicate that the ion exchange properties of the glasses are inferior to the base glass composition. Values not in parentheses indicate that the ion exchange properties are superior to those of the base glass composition.

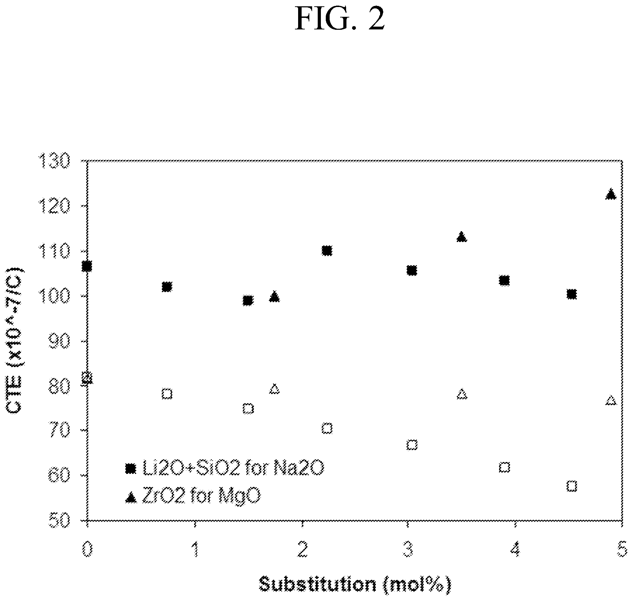

High temperature CTE curves for the glass compositions listed in Table 1 are shown in FIGS. 1a-d. FIG. 2 is a plot showing the impact of two types of compositional substitutions on the coefficient of thermal expansion (CTE) of the glasses described herein and listed in Table 1. The squares in FIG. 2 represent data for the substitution of Li₂O + SiO₂ for Na₂O and show results for both configurational CTE (closed squares) and low temperature (open squares) CTE. The triangles in FIG. 2 represent data for the substitution of ZrO₂ for MgO and show results for both configurational CTE (closed squares) and low temperature (open squares) CTE. The x-axis in FIG. 2 corresponds to the Li₂O concentration for the Li₂O + SiO₂-for-Na₂O substitutions and to the ZrO₂ concentration for the ZrO₂-for-MgO substitutions.

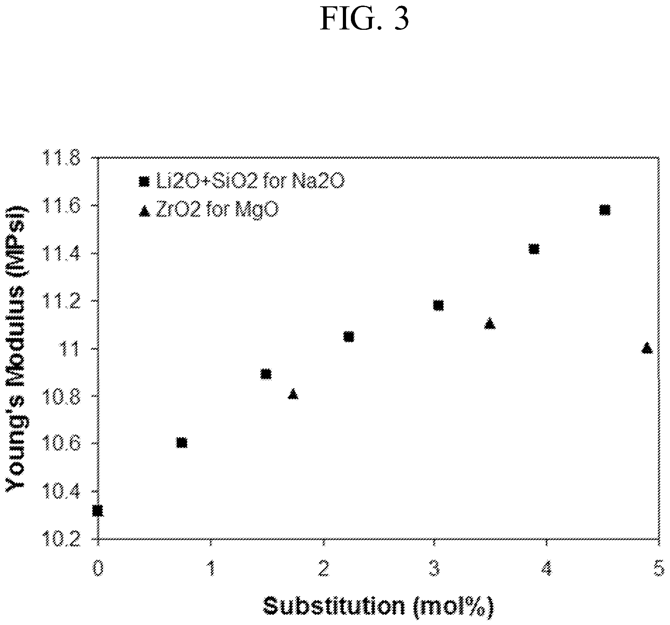

FIG. 3 is a plot showing the impact of compositional substitutions on Young's modulus of the glasses described herein and listed in Table 1 of two types of composition substitutions on Young's modulus. The squares in FIG. 3 represent data for the substitution of Li₂O + SiO₂ for Na₂O, whereas the triangles represent data for the substitution of ZrO₂ for MgO. The x-axis corresponds to the Li₂O concentration for the Li₂O + SiO₂-for-Na₂O substitutions and to the ZrO₂ concentration for the ZrO₂-for-MgO substitutions.

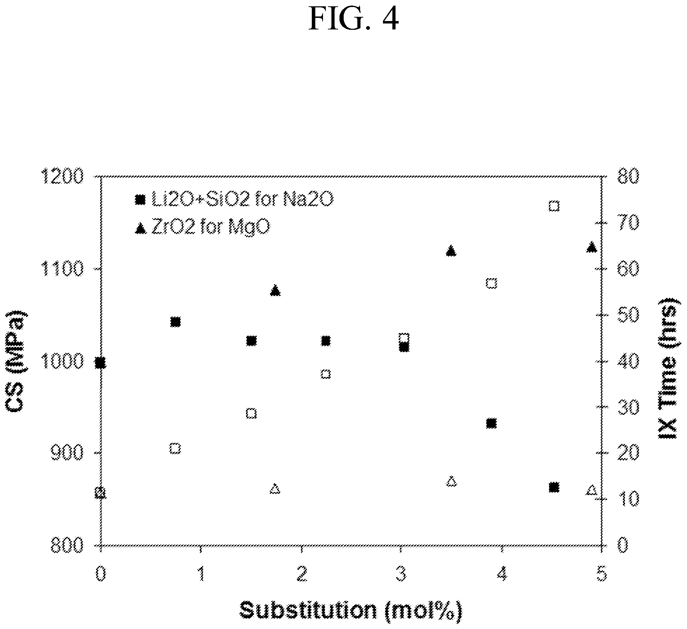

FIG. 4 is a plot showing the impact of two types of compositional substitutions on properties resulting from ion exchange at 410°C in a KNO₃ molten salt bath for the glasses described herein and listed in Table 1. The squares in FIG. 4 represent data for Li₂O + SiO₂-for-Na₂O substitutions show results for both compressive stress at 50 µm (closed squares) and ion exchange time needed to reach a DOL of 50 µm (open squares). The triangles represent data for ZrO₂-for-MgO substitutions and show results for both compressive stress at 50 µm (closed squares) and ion exchange time to reach a DOL of 50 µm (open squares). The x-axis corresponds to the Li₂O concentration for the Li₂O + SiO₂-for-Na₂O substitutions and to the ZrO₂ concentration for the ZrO₂-for-MgO substitutions.

Adding SiO₂ on the top of the base glass composition decreases both the absolute CTE values and ΔCTE (FIG. 1a). Whereas CS decreases for a fixed DOL, the ion exchange time needed to reach that DOL also decreases (Table 3). The addition of 3 mol% SiO₂ (example B) results in a glass that is still fusion formable (liquidus viscosity = 4.3 x 10⁶ Poise), this compositional variation may thus be formed into an ultra-thin article.

While substituting Li₂O + SiO₂ for Na₂O significantly decreases the absolute CTE values of the glass (FIG. 1b), the configurational CTE values are essentially unaffected by the substitution (FIG. 2). However, the elastic moduli substantially increase as a result of this substitution, with a maximum increase of 12% within the studied composition range (FIG. 3). Due to the decrease in Na₂O concentration, the CS decreases and the ion exchange time significantly increases as Li₂O and SiO₂ are substituted for Na₂O (Table 3 and FIG. 4).

The substitution of small amounts of ZrO₂ for MgO results in a decrease of ΔCTE, but further substitution of ZrO₂ for MgO causes the ΔCTE to increase (FIGS. 1c and 2). Moreover, the elastic moduli first increase and then slightly decrease when ZrO₂ is added (FIG. 3). The compressive stress is significantly improved as a result of this substitution, with only a minor increase in the ion exchange time (Table 3 and FIG. 4). From the perspective of ultra-thin glass formation, a glass embodying the substitution of ZrO₂ for MgO described by example L is the better candidate for ultra-thin forming, since it combines a lowered ΔCTE with improved Young's modulus, compressive stress, and liquidus viscosity (> 6 x 10⁶ Poise).

The substitution of ZrO₂ for MgO has also been combined with the substitutions of Li₂O and SiO₂ for Na₂O. However, these glasses combining substitution of ZrO₂ for MgO with substitution of Li₂O and SiO₂ for Na₂O do not offer any advantages over the substitutions of ZrO₂ for MgO alone, since the CTE values are identical or higher (FIG. 1d) and the ion exchange time is substantially higher (Table 3) than those values observed in the ZrO₂ for MgO substitution. Finally, the partial substitution of ZnO for MgO does not offer any advantages over the glasses containing only MgO, as seen in Table 1.

**Table 1. Compositions and properties of glasses.**

| **Composition (mol%)** | **Base Glass** | **A +1.5 mol%** SiO₂ | **B +3 mol%** SiO₂ | **C +3 mol% SiO2, Zn for Mg** | **D -1.5 mol%** Na₂O | **E -3 mol%** Na₂O |
|---|---|---|---|---|---|---|
| SiO₂ | 69.07 | 70.34 | 72.05 | 71.98 | 69.75 | 70.51 |
| Al₂O₃ | 10.21 | 9.71 | 9.23 | 9.23 | 10.21 | 10.20 |
| Na₂O | 15.18 | 14.52 | 13.68 | 13.80 | 13.68 | 12.19 |
| Li₂O | | | | | 0.74 | 1.50 |
| MgO | 5.32 | 5.22 | 4.83 | 2.47 | 5.40 | 5.38 |
| CaO | 0.06 | 0.05 | 0.05 | 0.04 | 0.05 | 0.06 |
| ZnO | | | | 2.34 | | |
| ZrO₂ | | | | | | |
| SnO₂ | 0.16 | 0.16 | 0.16 | 0.15 | 0.17 | 0.16 |

| **Properties** | **Base Glass** | **A** | **B** | **C** | **D** | **E** |
|---|---|---|---|---|---|---|
| Anneal Pt. (°C): | 655 | 657 | 664 | 655 | 640 | 635 |
| Strain Pt. (°C): | 601 | 604 | 608 | 600 | 586 | 581 |
| Softening Pt. (°C): | 899 | 903 | 919 | 906 | 890 | 892 |
| Density (g/cm³): | 2.434 | 2.426 | 2.414 | 2.452 | 2.430 | 2.424 |
| CTE from 25-300°C (x10⁻⁷/^{o}C): | 81.8 | 78.9 | 76 | 76.3 | 78.1 | 74.6 |
| HT CTE (x10⁻⁷/°C): | 195 | 189 | 182 | 184 | 189 | 182 |
| ΔCTE (x10⁻⁷/°C): | 107 | 102 | 99 | 101 | 102 | 99 |
| Liquidus Temp (°C): | 970 | | 990 | 990 | 1070 | |
| Primary Devit Phase: | Albite | | Albite | Albite | Forsterite | |
| Liquidus Visc (kPoise): | 4783 | | 4277 | | 400 | |
| Poisson's Ratio: | 0.213 | 0.219 | 0.208 | 0.213 | 0.205 | 0.216 |
| Shear Modulus (Mpsi): | 4.254 | 4.239 | 4.239 | 4.216 | 4.399 | 4.476 |
| Young's Modulus (Mpsi): | 10.317 | 10.334 | 10.246 | 10.23 | 10.598 | 10.889 |
| Refractive Index: | 1.5008 | 1.4992 | | 1.5003 | 1.5014 | 1.5015 |
| SOC (nm/cm/MPa): | 29.54 | 29.83 | 30.15 | 31.29 | 29.46 | 29.4 |

| **Composition (mol%)** | **F -4.5 mol% Na₂O** | **G -6 mol% Na₂O** | **H -7.5 mol% Na₂O** | **I -9 mol% Na₂O** | **J -6 mol%Na2O, Zn for Mg** | **K -9 mol% Na₂O, Zn for Mg** |
|---|---|---|---|---|---|---|
| SiO₂ | 71.20 | 71.92 | 72.59 | 73.37 | 71.87 | 73.34 |
| Al₂O₃ | 10.21 | 10.21 | 10.18 | 10.21 | 10.21 | 10.21 |
| Na₂O | 10.72 | 9.21 | 7.70 | 6.23 | 9.27 | 6.26 |
| Li₂O | 2.25 | 3.04 | 3.90 | 4.53 | 3.06 | 4.60 |
| MgO | 5.39 | 5.40 | 5.40 | 5.44 | 2.75 | 2.74 |
| CaO | 0.06 | 0.06 | 0.06 | 0.06 | 0.05 | 0.06 |
| ZnO | | | | | 2.62 | 2.62 |
| ZrO₂ | | | | | | |
| SnO₂ | 0.17 | 0.16 | 0.16 | 0.17 | 0.17 | 0.16 |

| **Properties** | **F** | **G** | **H** | **I** | **J** | **K** |
|---|---|---|---|---|---|---|
| Anneal Pt. (°C): | 635 | 640 | 648 | 656 | 630 | 643 |
| Strain Pt. (°C): | 581 | 586 | 593 | 601 | 577 | 588 |
| Softening Pt. (°C): | 894 | 903 | 909 | 917 | 891 | 911 |
| Density (g/cm³): | 2.419 | 2.412 | 2.404 | 2.397 | 2.451 | 2.434 |
| CTE from 25-300°C (x10⁻⁷/^{o}C): | 70.3 | 66.7 | 61.8 | 57.5 | 65.6 | 56.5 |
| HT CTE (x10⁻⁷/°C): | 191 | 181 | 174 | 166 | 181 | 177 |
| ΔCTE (x10⁻⁷/°C): | 110 | 106 | 103 | 100 | 107 | 111 |
| Liquidus Temp (°C): | | | | | | |
| Primary Devit Phase: | | | | | | |
| Liquidus Vise (kPoise): | | | | | | |
| Poisson's Ratio: | 0.201 | 0.197 | 0.208 | 0.205 | 0.211 | 0.212 |
| Shear Modulus (Mpsi): | 4.601 | 4.667 | 4.724 | 4.805 | 4.646 | 4.788 |
| Young's Modulus (Mpsi): | 11.048 | 11.176 | 11.414 | 11.577 | 11.252 | 11.61 |
| Refractive Index: | 1.5019 | 1.5021 | 1.5021 | 1.5025 | 1.5052 | 1.5051 |
| SOC (nm/cm/MPa): | 29.59 | 29.56 | 29.79 | 29.8 | 30.7 | 30.78 |
| | | | | | | |

| **Composition (mol%)** | **L 1.8 mol% Zr for Mg** | **M 3.6 mol% Zr/Mg** | **N 5.4 mol% Zr for Mg** | **O 1.8 mol% Zr for Mg** | **R 1.8 mol% Zr for Mg** | **V Total Zr for Mg** |
|---|---|---|---|---|---|---|
| SiO₂ | 68.93 | 68.91 | 69.14 | 69.53 | 71.39 | 68.77 |
| Al₂O₃ | 10.21 | 10.25 | 10.27 | 9.85 | 10.04 | 9.51 |
| Na₂O | 15.26 | 15.32 | 15.47 | 8.93 | 7.55 | 10.17 |
| Li₂O | | | | 6.28 | 6.30 | 6.43 |
| MgO | 3.66 | 1.83 | 0.03 | 3.51 | 1.69 | 0.02 |
| CaO | 0.04 | 0.04 | 0.05 | 0.05 | 0.06 | 0.05 |
| ZnO | | | | | 0.67 | 2.49 |
| ZrO₂ | 1.74 | 3.49 | 4.90 | 1.69 | 2.15 | 2.41 |
| SnO₂ | 0.16 | 0.15 | 0.15 | 0.16 | 0.16 | 0.15 |

| **Properties** | **L** | **M** | **N** | **O** | **R** | **V** |
|---|---|---|---|---|---|---|
| Anneal Pt. (°C): | 691 | 734 | 784 | 677 | 684 | 683 |
| Strain Pt. (°C): | 636 | 677 | 729 | 621 | 627 | 626 |
| Softening Pt. (°C): | 939.9 | 979.3 | 1017.5 | 936.1 | 948.1 | 946.5 |
| Density (g/cm³): | 2.479 | 2.52 | 2.546 | 2.454 | 2.453 | 2.509 |
| CTE from 25-300°C (x10⁻⁷/°C): | 79.4 | 78.2 | 77 | 64.7 | 58 | 66.6 |
| HT CTE (x10⁻⁷/°C): | 186 | 197 | 206 | 185 | 175.3 | 179.4 |
| ΔCTE (x10⁻⁷/°C): | 100 | 113 | 123 | 112 | 109.5 | 105.3 |
| Liquidus Temp (°C): | <850 | >1270 | >1270 | | | |
| Primary Devit Phase: | no devit | unknown | unknown | | | |
| Liquidus Vise (kPoise): | >668931 | <24 | | | | |
| Poisson's Ratio: | 0.223 | 0.227 | 0.226 | 0.206 | 0.208 | 0.227 |
| Shear Modulus (Mpsi): | 4.419 | 4.527 | 4.487 | 4.762 | 4.831 | 4.66 |
| Young's Modulus (Mpsi): | 10.813 | 11.109 | 11.006 | 11.482 | 11.67 | 11.433 |
| Refractive Index: | 1.5096 | 1.5181 | 1.5233 | 1.5106 | 1.5112 | 1.5151 |
| SOC (nm/cm/MPa): | 30.34 | 31.25 | 32.06 | 30.56 | 31.1 | 32.08 |
| | | | | | | |

**Table 2. Ion Exchange properties of the glasses listed in Table 1. The compressive stress (CS) and depth of layer (DOL) were obtained as a result of treatment of annealed samples in technical grade KNO₃ molten salt bath. The ion exchange treatments were carried out at 410°C for 4, 8, and 16 hours. CS and DOL are reported in megaPascals (MPa) and microns (µm), respectively.**

| Sample | Change in composition from base glass | **Ion Exchange at 410°C** | | | | | |
|---|---|---|---|---|---|---|---|
| | | **CS (4h)** | **CS (8h)** | **CS (16** h) | **DOL (4h)** | **DOL (8h)** | **DOL (16 h)** |
| | **Base glass** | 1040 | 1019 | 976 | 30.4 | 42.1 | 59.3 |
| **A** | **+1.5 mol% SiO₂** | 998 | 970 | 936 | 30.1 | 42.6 | 60.5 |
| **C** | **+3 mol% SiO₂, Zn for Mg** | 942 | 920 | 885 | 30.5 | 42.7 | 60.5 |
| **D** | **-1.5 mol% Na₂O** | 1084 | 1087 | 1048 | 22.6 | 31.3 | 43.7 |
| **E** | **-3 mol% Na₂O** | 1076 | 1088 | 1042 | 19.5 | 26.9 | 37.2 |
| **F** | **-4.5 mol% Na₂O** | 1054 | 1067 | 1038 | 17.1 | 23.3 | 32.7 |
| **G** | **-6 mol% Na₂O** | 1026 | 1043 | 1021 | 15.4 | 21.1 | 29.8 |
| **H** | **-7.5 mol% Na₂O** | 1015 | 1005 | 986 | 13.7 | 18.8 | 26.5 |
| **I** | **-9 mol% Na₂O** | 982 | 970 | 946 | 12.1 | 16.5 | 23.3 |
| **J** | **-6 mol% Na₂O, Zn for Mg** | 1052 | 1039 | 1011 | 15.1 | 20.8 | 28.9 |
| **K** | **-9 mol% Na₂O, Zn for Mg** | 933 | 958 | 948 | 12.1 | 16.5 | 23.1 |
| **L** | **1.8 mol% Zr for Mg** | 1110 | 1090 | 1069 | 28.9 | 40.2 | 55.9 |
| **M** | **3.6 mol% Zr for Mg** | 1140 | 1129 | 1118 | 27.9 | 38.4 | 52.9 |
| **N** | **5.4 mol% Zr for Mg** | 1142 | 1136 | 1116 | 29.7 | 40.6 | 56.9 |
| **O** | **Ex. G, 1.8 mol%Zr forMg** | 1067 | 1071 | 1065 | 15.7 | 22.1 | 30.7 |
| **R** | **Ex. I, 1.8 mol%Zr for Mg** | 998 | 993 | 990 | 13.7 | 19.4 | 27.2 |
| **V** | **Ex. J, Zr for Mg** | 1092 | 1108 | 1089 | 19.3 | 26.4 | 36.5 |

**Table 3. Ion exchange properties of glasses listed Table 1. The compressive stress (CS) at a fixed depth of layer (DOL) of 50 µm and ion exchange time required to get DOL = 50 µm were calculated from ion exchange data for annealed samples at 410°C treated for various times in a technical grade KNO₃ molten salt bath. Values in parentheses indicate that the ion exchange properties of the glasses are inferior to the base glass composition. Values not in parentheses indicate that the ion exchange properties are superior to those of the base glass composition.**

| Sample | Change in composition from base glass | **CS @ 50 µm (Mpa)** | **Time to 50 µm DOL (h)** |
|---|---|---|---|
| | **Base glass** | 998 | 11.3 |
| **A** | **+1.5 mol% SiO₂** | (957) | 11.0 |
| **C** | **+3 mol% SiO₂, Zn for Mg** | (905) | 10.9 |
| **D** | **-1.5 mol% Na₂O** | 1041 | (20.7) |
| **E** | **-3 mol% Na₂O** | 1022 | (28.5) |
| **F** | **-4.5 mol% Na₂O** | 1022 | (37.0) |
| **G** | **-6 mol% Na₂O** | 1015 | (44.9) |
| **H** | **-7.5 mol% Na₂O** | (932) | (56.8) |
| **I** | **-9 mol% Na₂O** | (863) | (73.5) |
| **J** | **-6 mol% Na₂O, Zn for Mg** | (950) | (47.3) |
| **K** | **-9 mol% Na₂O, Zn for Mg** | (984) | (74.5) |
| **L** | **1.8 mol% Zr for Mg** | 1077 | (12.6) |
| **M** | **3.6 mol% Zr for Mg** | 1120 | (13.9) |
| **N** | **5.4 mol% Zr for Mg** | 1124 | (12.2) |
| **O** | **Ex. G, 1.8 mol% Zr for Mg** | 1065 | 42.0 |
| **R** | **Ex. I, 1.8 mol% Zr for Mg** | 976 | 53.9 |
| **V** | **Ex. J, Zr for Mg** | 1089 | 29.5 |

While typical embodiments have been set forth for the purpose of illustration, the foregoing description should not be deemed to be a limitation on the scope of the disclosure or appended claims. Accordingly, various modifications, adaptations, and alternatives may occur to one skilled in the art without departing from the scope of the present disclosure or appended claims.

## Claims

1. A glass, the glass comprising at least 65 mol% SiO₂ and at least 6 mol% Na₂O, the glass having a thickness of less than 400 µm and a difference between a first coefficient of thermal expansion and a second coefficient of thermal expansion ΔCTE of less than 107 x 10⁷°C⁻¹, **characterised in that** the first coefficient of thermal expansion is the coefficient of thermal expansion of the glass in its liquid state and the second coefficient of thermal expansion is the coefficient of thermal expansion of the glass in its glassy state at room temperature.

2. The glass according to Claim 1, wherein the glass is ion exchanged and has a layer under compressive stress extending from a surface to a depth of layer, wherein the compressive stress is at least 500 MPa and the depth of layer is at least 5 µm.

3. The glass according to Claim 1 or 2, wherein the glass has a liquidus viscosity of at least 100 kP.

4. The glass according to claim 1, wherein the first coefficient of thermal expansion is less than 195 x 10⁷°C⁻¹.

5. The glass according to any one of claims 1 to 3, wherein the glass further comprises Al₂O₃ and at least one of Li₂O, K₂O, MgO, CaO, ZnO, and wherein Na₂O + K₂O + Li₂O - Al₂O₃ ≥ 0 mol%.

6. The glass according to any one of the preceding claims, wherein the glass comprises: from 65 mol% to 75 mol% SiO₂; from 7 mol% to 16 mol% Al₂O₃; from 0 mol% to 10 mol% Li₂O; from 6 mol% to 16 mol% Na₂O; from 0 mol% to 2.5 mol% K₂O; from 0 mol% to 8.5 mol% MgO; from 0 mol% to 1.5 mol% CaO; from 0 mol% to 6 mol% ZnO; and from 0 mol% to 6 mol% ZrO₂.

7. The glass according to any one of the preceding claims, wherein the glass comprises from 8 mol% to 11 mol% Al₂O₃.

8. The glass according to any one of the preceding claims, wherein the glass comprises from 11 mol% to 16 mol% Na₂O.

9. The glass according to any one of the preceding claims, wherein the glass comprises 0 mol% Li₂O.

10. The glass according to any one of the preceding claims, wherein 3 mol% ≤ MgO + CaO + ZnO ≤ 4 mol%.

## Patentansprüche

1. Glas, wobei das Glas mindestens 65 Mol-% SiO₂ und mindestens 6 Mol-% Na₂O umfasst, wobei das Glas eine Dicke von weniger als 400 µm und eine Differenz zwischen einem ersten Wärmeausdehnungskoeffizienten und einem zweiten Wärmeausdehnungskoeffizienten ΔCTE von weniger als 107 x 10⁷°C⁻¹ aufweist, **dadurch gekennzeichnet, dass** der erste Wärmeausdehnungskoeffizient der Wärmeausdehnungskoeffizient des Glases in seinem flüssigen Zustand ist und der zweite Wärmeausdehnungskoeffizient der Wärmeausdehnungskoeffizient des Glases in seinem Glaszustand bei Raumtemperatur ist.

2. Glas nach Anspruch 1, wobei das Glas ionenausgetauscht ist und eine Schicht unter Druckspannung aufweist, die sich von einer Oberfläche bis zu einer Schichttiefe erstreckt, wobei die Druckspannung mindestens 500 MPa beträgt und die Schichttiefe mindestens 5 µm beträgt.

3. Glas nach Anspruch 1 oder 2, wobei das Glas eine Liquidusviskosität von mindestens 100 kP aufweist.

4. Glas nach Anspruch 1, wobei der erste Wärmeausdehnungskoeffizient kleiner als 195 x 10⁷°C⁻¹ ist.

5. Glas nach einem der Ansprüche 1 bis 3, wobei das Glas ferner Al₂O₃ und mindestens eines von Li₂O, K₂O, MgO, CaO, ZnO umfasst und wobei Na₂O + K₂O + Li₂O - Al₂O₃ ≥ 0 Mol-%.

6. Glas nach einem der vorhergehenden Ansprüche, wobei das Glas Folgendes umfasst: 65 Mol-% bis 75 Mol-% SiO₂; 7 Mol-% bis 16 Mol-% Al₂O₃; 0 Mol-% bis 10 Mol-% Li₂O; 6 Mol-% bis 16 Mol-% Na₂O; 0 Mol-% bis 2,5 Mol-% K₂O; 0 Mol-% bis 8,5 Mol-% MgO; 0 Mol-% bis 1,5 Mol-% CaO; 0 Mol-% bis 6 Mol-% ZnO; und 0 Mol-% bis 6 Mol-% ZrO₂.

7. Glas nach einem der vorhergehenden Ansprüche, wobei das Glas 8 Mol-% bis 11 Mol-% Al₂O₃ umfasst.

8. Glas nach einem der vorhergehenden Ansprüche, wobei das Glas 11 Mol-% bis 16 Mol-% Na₂O umfasst.

9. Glas nach einem der vorhergehenden Ansprüche, wobei das Glas 0 Mol-% Li₂O umfasst.

10. Glas nach einem der vorhergehenden Ansprüche, wobei 3 Mol-% ≤ MgO + CaO + ZnO ≤ 4 Mol-%.

## Revendications

1. Verre, le verre comprenant au moins 65 % en moles de SiO₂ et au moins 6 % en moles de Na₂O, le verre ayant une épaisseur inférieure à 400 µm et une différence entre un premier coefficient de dilation thermique et un deuxième coefficient de dilation thermique ΔCTE inférieure à 107 x 10⁷°C⁻¹, **caractérisé en ce que** le premier coefficient de dilatation thermique est le coefficient de dilatation thermique du verre à l'état liquide et le deuxième coefficient de dilatation thermique est le coefficient de dilatation thermique du verre à l'état vitreux à température ambiante.

2. Verre selon la revendication 1, dans lequel le verre subit un échange d'ions et a une couche sous contrainte de compression s'étendant d'une surface à une profondeur de couche, dans lequel la contrainte de compression est d'au moins 500 MPa et la profondeur de couche est d'au moins 5 µm.

3. Verre selon la revendication 1 ou 2, dans lequel le verre a une viscosité de liquidus d'au moins 100 kP.

4. Verre selon la revendication 1, dans lequel le premier coefficient de dilatation thermique est inférieur à 195 x 10⁷°C⁻¹.

5. Verre selon l'une quelconque des revendications 1 à 3, dans lequel le verre comprend en outre du Al₂O₃ et au moins l'un de Li₂O, K₂O, MgO, CaO, ZnO, et dans lequel Na₂O + K₂O + Li₂O - Al₂O₃ ≥ 0 % en moles.

6. Verre selon l'une quelconque des revendications précédentes, dans lequel le verre comprend : de 65 % en moles à 75 % en moles de SiO₂ ; de 7 % en moles à 16 % en moles de Al₂O₃ ; de 0 % en moles à 10 % en moles de Li₂O; de 6 % en moles à 16 % en moles de Na₂O ; de 0 % en moles à 2,5 % en moles de K₂O ; de 0 % en moles à 8,5 % en moles de MgO ; de 0 % en moles à 1,5 % en moles de CaO ; de 0 % en moles à 6 % en moles de ZnO ; et de 0 % en moles à 6 % en moles de ZrO₂.

7. Verre selon l'une quelconque des revendications précédentes, dans lequel le verre comprend de 8 % en moles à 11 % en moles de Al₂O₃.

8. Verre selon l'une quelconque des revendications précédentes, dans lequel le verre comprend de 11 % en moles à 16 % en moles de Na₂O.

9. Verre selon l'une quelconque des revendications précédentes, dans lequel le verre comprend 0 % en moles de Li₂O.

10. Verre selon l'une quelconque des revendications précédentes, dans lequel 3 % en moles ≤ MgO + CaO + ZnO ≤ 4 % en moles.
